# EUROPEAN PATENT SPECIFICATION

(11) **EP 4 543 726 B1**
(45) Date of publication and mention of the grant of the patent: **29.04.2026**
(21) Application number: 22734969.3
(22) Date of filing: 23.06.2022
(51) Int. Cl.: B60W 20/10, B60W 30/14, B60W 50/00

(54) **A METHOD OF CONTROLLING A CRUISE CONTROL SYSTEM FOR AVOIDING SWING OUT**
VERFAHREN ZUR STEUERUNG EINES GESCHWINDIGKEITSREGELSYSTEMS ZUR VERMEIDUNG DES AUSSCHWINGENS
PROCÉDÉ DE COMMANDE D'UN SYSTÈME DE RÉGULATION DE VITESSE POUR ÉVITER L'OSCILLATION

(43) Date of publication of application: 30.04.2025
(73) Proprietor: VOLVO TRUCK CORPORATION, 405 08 Göteborg (SE)
(72) Inventor: LAINE, Leo, 438 94 HÄRRYDA (SE); JONASSON, Mats, 433 49 PARTILLE (SE)
(74) Representative: Kransell & Wennborg KB
(86) International application number: PCT/EP2022/067196
(87) International publication number: WO 2023/247044

(56) References cited:
- EP-A1- 2 058 190
- DE-A1- 102016 119 897
- DE-A1- 102017 219 876
- DE-A1- 102019 119 786

## Description

### TECHNICAL FIELD

The present invention relates to a method of controlling a cruise control system. In particular, the method controls the cruise control system to avoid swing out of at least one trailer. The invention also relates to a cruise control system. Although the invention will mainly be directed to a vehicle in the form of a truck, the invention may also be applicable for other types of vehicles comprising a tractor unit and at least one trailer unit pivotably coupled to each other, such as e.g. working machines, etc.

### BACKGROUND

During operation of a vehicle combination comprising a tractor unit and at least one trailer unit, a swing out condition of the at least one trailer is a potentially dangerous driving condition. The swing out condition is a driving situation where the at least one trailer loses the lateral grip between the tire surface of the wheels and the road surface. In particular, when the vehicle combination is braking and at the same time not driving straight ahead, in particular when brakes of the trailer is applied more excessively compared to the brakes of the tractor during low friction between the wheels and the road surface.

During a swing out condition, the trailer is rotating around e.g. a king pin coupling connecting the tractor unit and the trailer unit to each other, which may finally end up in a situation where the entire vehicle combination rolls over to the side, which may cause severe damage to the vehicle as well as to surrounding vehicles in the vicinity of the vehicle rolling over. Also, the operator will not be in control of the at least one trailer unit which may slide over and collide with oncoming traffic.

EP2058190 describes a control of a vehicle during swing out condition.

One solution to avoid a swing out condition is to reduce the braking action of the foundation brakes arranged on the trailer unit. However, when a swing out condition is initiated and subsequently detected, it is rather difficult to compensate and avoid the swing out condition to continue. It is thus a desire to further improve operation of vehicle combinations provided with a tractor unit and at least one trailer unit for the purpose of reducing the risk of fully developed swing out condition to occur during operation.

### SUMMARY

It is thus an object of the present invention to at least partially overcome the above-described deficiencies.

According to a first aspect, there is provided a computer implemented method of controlling a cruise control system of a vehicle comprising a tractor unit and at least one trailer unit pivotably coupled to each other, wherein the tractor unit comprises an actuator configured to apply a torque on at least one wheel of the tractor unit during propulsion, and to generate electric power during braking, the cruise control system comprising processing circuitry operable to control operation of the actuator, the method comprising controlling, by the processing circuitry, the actuator to operate the vehicle at a demanded cruise control vehicle speed; determining, by the processing circuitry, a swing out condition of the at least one trailer unit, in which swing out condition a parameter indicative of a relative rotation between the tractor unit and the at least one trailer unit exceeds a predetermined threshold limit; and controlling, by the processing circuitry, the actuator to apply a propulsion torque on the at least one wheel of the tractor unit for deviating from the demanded cruise control vehicle speed in response to the determined swing out condition of the at least one trailer unit.

The demanded cruise control vehicle speed should be construed as a pre-set vehicle speed. For an operator-controlled vehicle, the demanded cruise control vehicle speed is preferably provided to a cruise control system of the vehicle by the operator. For an autonomously controlled vehicle, the demanded cruise control vehicle speed can set in response to an allowable vehicle speed of the road, or by an upper layer control functionality, etc. The demanded cruise control vehicle speed is thus a speed the vehicle should keep, i.e. not exceed, under normal circumstances when the vehicle is not exposed to e.g. the swing out condition. The demanded cruise control vehicle speed may also be a maximum vehicle speed set by country specific regulations. Such speed limit regulations are conventionally implemented in the vehicles as coded speed limits that the vehicle is unable to over limit. Hence, different countries have maximum speed limit regulations for heavy-duty vehicles, and the present invention can hereby temporarily override this speed regulation when a swing out condition is determined by the processing circuitry and the vehicle is operated at the regulated speed limit. The vehicle will hence keep the demanded cruise control vehicle speed without an operator pushing the accelerator pedal. Obviously, for an operator-controlled vehicle, the demanded cruise control vehicle speed can be overruled, whereby the vehicle speed is temporarily increased, in response to the operator pushing the accelerator pedal. The demanded cruise control vehicle speed may also be disabled by the operator when e.g. pushing the brake pedal, etc. The demanded cruise control vehicle speed may be an adaptive cruise control vehicle speed, which is controlled based on the vehicle speed of another vehicle located in front of the vehicle, within a certain distance.

Accordingly, the actuator may apply a propulsion torque to operate the vehicle at the demanded cruise control vehicle speed. The actuator may also apply a brake torque to operate the vehicle at the demanded cruise control vehicle speed. In the first example, the applied torque in response to determining a swing out condition, is an increased propulsion torque compared to the propulsion torque applied when operating the vehicle at the demanded cruise control vehicle speed. In the other example, the brakes are released, and propulsion is applied in response to determining a swing out condition.

Further, the parameter indicative of a relative rotation between the tractor unit and the at least one trailer unit may be a relative rotation between the tractor unit and the trailer unit, or a derivative thereof, i.e. a relative angular velocity. Hence, and according to an example embodiment, the swing out condition may be further based on a detected rotation rate of the at least one trailer unit relative to the tractor unit. As a further option, the parameter indicative of a relative rotation may be based on lateral slip value of the wheels of the tractor unit and the trailer unit. Thus, a difference in lateral slip of the wheels of the trailer unit and the wheels of the tractor unit may be an indication that the relative between the tractor unit and the trailer unit has occurred or is about to take place. The tractor unit and the trailer unit may be pivotably connected to each other by e.g. a fifth-wheel coupling, a draw bar, or other coupling arrangement. The relative rotation may advantageously be combined with other motion parameters, such as e.g. trailer lateral slip, detected by the processing circuitry for determining the swing out condition.

The present invention is based on the insight that by temporarily overruling the demanded cruise control vehicle speed in response the determination of a swing out condition, a straightening effect of the vehicle combination will be obtained which can inhibit the trailer unit from further rotation relative to the tractor unit, i.e. the swing out condition will not continue to proceed to a potentially dangerous situation. Further, and according to an example embodiment, the processing circuitry may be configured to control the actuator to apply the propulsion torque for a predetermined time period, and subsequently control the actuator to reduce the applied propulsion torque for operating the vehicle at the demanded cruise control vehicle speed. Thus, the deviation from the demanded cruise control vehicle speed will only last for a short period of time, whereafter the vehicle will return to operation at the demanded cruise control vehicle speed. The predetermined time period may, for example, be a time period which is based on the swing out condition. Hence, a more excessive swing out condition results in a longer predetermined time period, and vice versa. Also, the predetermined time period may be a time period at which the processing circuitry assumes that the swing out condition has been resolved.

According to an example embodiment, the method may further comprise determining, by the processing circuitry, that the relative rotation falls below the predetermined threshold limit after the actuator applies the propulsion torque; and controlling, by the processing circuitry, the actuator to reduce the applied propulsion torque for operating the vehicle at the demanded cruise control vehicle speed in response to the relative rotation falling below the predetermined threshold limit.

Hereby, the deviation from the demanded cruise control vehicle speed will last until the operating condition is determined to be safe again, i.e. when the relative rotation returns to an acceptable limit in which swing out is determined to no longer take place.

According to an example embodiment, the method may further comprise determining, by the processing circuitry, an oncoming traffic situation for the vehicle; and setting, by the processing circuitry, the predetermined threshold limit based on the oncoming traffic situation.

The oncoming traffic situation should be construed as surrounding vehicles in the other vehicle lane, ahead of the vehicle, i.e. vehicle(s) driving in the opposite direction compared to the vehicle in question. Thus, if one or several vehicles is approaching the vehicle in the other vehicle lane, the predetermined threshold limit is preferably set to a lower limit compared to when no oncoming traffic is present. Hereby, action can be taken at an earlier point in time to avoid the trailer unit to collide with the oncoming vehicles.

As an alternative, or as a complement, and according to an example embodiment, the method may further comprise determining, by the processing circuitry, a current road friction between a tire surface of a wheel of the trailer unit and a road surface operated by the vehicle; and setting, by the processing circuitry, the predetermined threshold limit based on the current road friction. The predetermined threshold limit is preferably set to a lower limit for a slippery road condition compared to the predetermined threshold limit for a less slippery road condition. Put it differently, the predetermined threshold limit is reduced when the road friction between the tire surface of a wheel of the trailer unit is reduced. The predetermined threshold limit can be reduced proportionally to the reduction of the road friction. The current friction between the tire surface of the wheel and the road surface may be determined by processing circuitry by e.g. receiving a signal from an upper layer control functionality of the vehicle.

According to an example embodiment, the method may further comprise determining, by the processing circuitry, an upcoming driving situation for the vehicle; identifying, by the processing circuitry, the upcoming driving situation as allowing for a temporarily increased vehicle speed; and controlling, by the processing circuitry, the actuator to apply a propulsion torque on the at least one wheel of the tractor unit for deviating from the demanded cruise control vehicle speed only when the upcoming driving situation allows for the temporarily increased vehicle speed.

An advantage is that the vehicle speed is only increased if the upcoming driving situation allows for such temporary increase. For example, if an obstacle is positioned on the road ahead, which obstacle in fact requires a reduction of the vehicle speed, then the temporary increase in vehicle speed should preferably be aborted. As another example, the temporary increase in vehicle speed should preferably be aborted if another vehicle is positioned ahead of the vehicle and there is a risk of colliding with that vehicle from behind if increasing the vehicle speed.

According to an example embodiment, the method may further comprise determining, by the processing circuitry, a curvature of an upcoming road path operable by the vehicle; and controlling, by the processing circuitry, the actuator to apply a propulsion torque on the at least one wheel of the tractor unit for deviating from the demanded cruise control vehicle speed only when a curve radius of the curvature of the upcoming road path is above a predetermined threshold radius. Also, and according to an example embodiment, the method may further comprise determining, by the processing circuitry, a width of an ego lane operated by the vehicle; and controlling, by the processing circuitry, the actuator to apply a propulsion torque on the at least one wheel of the tractor unit for deviating from the demanded cruise control vehicle speed only when the width of the ego lane is larger than a predetermined threshold width. Applying a propulsion torque on the actuator of the tractor unit should preferably be avoided when operating the vehicle along a narrow road path.

According to an example embodiment, the swing out condition may be detected by at least one of an articulation angle sensor and a camera arranged on one of the tractor unit and the at least one trailer unit.

According to a second aspect, there is provided a cruise control system for a vehicle comprising a tractor unit and at least one trailer unit, the tractor unit and the at least one trailer unit pivotably coupled to each other, wherein the cruise control system comprises a control unit comprising control circuitry configured to control an actuator of the tractor unit to apply a torque on at least one wheel of the tractor unit during propulsion, and to generate electric power during braking, the processing circuitry being configured to control the actuator to operate the vehicle at a demanded cruise control vehicle speed; determine a swing out condition of the at least one trailer unit, in which swing out condition a parameter indicative of a relative rotation between the tractor unit and the at least one trailer unit exceeds a predetermined threshold limit; and control the actuator to apply a propulsion torque on the at least one wheel of the tractor unit for deviating from the demanded cruise control vehicle speed in response to the determined swing out condition of the at least one trailer unit.

The expression "processing circuitry" as used above should be understood to include any type of computing device, such as an ASIC, a micro-processor, etc. It should also be understood that the actual implementation of such a processing circuitry may be divided between more than a single device/circuit.

Effects and features of the second aspect are largely analogous to those described above in relation to the first aspect.

According to a third aspect, there is provided a vehicle comprising a cruise control system according to the second aspect.

According to a fourth aspect, there is provided a computer program comprising program code means for performing the method of any of the embodiments described above in relation to the first aspect when the program is run on a computer.

According to a fifth aspect, there is provided a non-transitory computer readable medium carrying a computer program comprising program code for performing the method of any of the embodiments described above in relation to the first aspect when the program product is run on a computer.

According to a sixth aspect, there is provided a control unit for controlling an auxiliary system of a transportation vehicle, the control unit being configured to perform the method according to any of the embodiments described above in relation to the first aspect.

Effects and features of the third, fourth, fifth and sixth aspects are largely analogous to those described above in relation to the first aspect.

### BRIEF DESCRIPTION OF THE DRAWINGS

The above, as well as additional objects, features, and advantages, will be better understood through the following illustrative and non-limiting detailed description of exemplary embodiments, wherein:
Fig. 1 is a lateral side view illustrating an example embodiment of a vehicle in the form of a truck;
Fig. 2 is a schematic illustration of the Fig. 1 vehicle during a swing out condition according to an example embodiment;
Fig. 3 illustrating the vehicle operating at a road path according to an example embodiment;
Fig. 4 is a schematic illustration of modules included for operating a method of controlling a cruise control system according to an example embodiment; and
Fig. 5 is a flow chart of a method of controlling a cruise control system according to an example embodiment.

### DETAILED DESCRIPTION

The present invention will now be described more fully hereinafter with reference to the accompanying drawings, in which exemplary embodiments are shown. The invention may, however, be embodied in many different forms and should not be construed as limited to the embodiments set forth herein; rather, these embodiments are provided for thoroughness and completeness. Like reference character refer to like elements throughout the description.

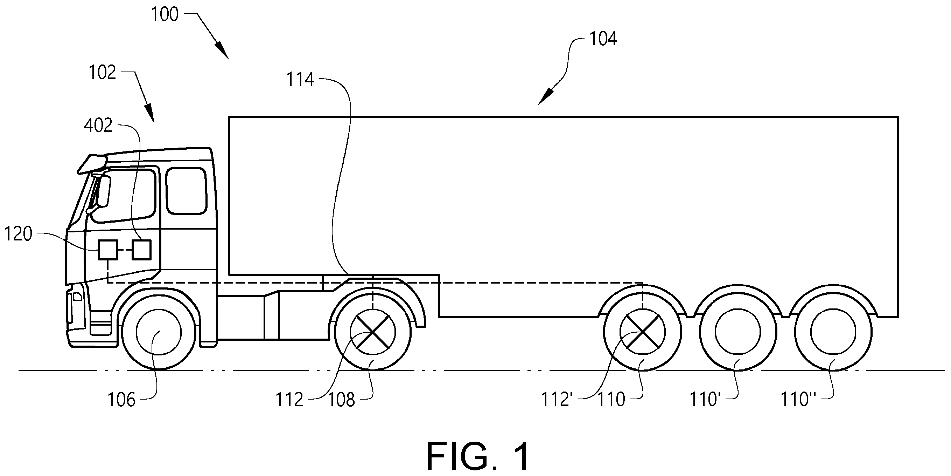

With particular reference to Fig. 1, there is depicted a vehicle 100 in the form of a truck. The vehicle comprises a tractor unit 102 and at least one trailer unit 104, in Fig. 1 indicated as a single trailer unit 104 for simplifying for the skilled reader. The tractor unit 102 and the trailer unit 104 are pivotably connected to each other at a pivot point 114. The pivot point 114 may, for example, be a fifth-wheel coupling, a drawbar coupling, etc. The tractor unit 102 comprises a pair of front wheels 106 and a pair of rear wheels 108. In the exemplified example depicted in Fig. 1, the trailer unit 104 comprises three pair of wheels 110, 110', 110".

The tractor unit 102 comprises an actuator 112 illustrated as operatively connected to the pair of rear wheels 108. It should be understood that the actuator 112 may equally as well be operatively connected to the pair of front wheels 106, and Fig. 1 merely serves as an example. The actuator 112 is configured to apply a torque on the pair of rear wheels 108 of the tractor unit 102 during propulsion, and to generate electric power during braking. The electric power generated during braking is preferably fed to an energy storage system (not shown) of the vehicle 100. The actuator 112 is preferably an electric machine.

Furthermore, the exemplified vehicle 100 also comprises a trailer actuator 112', exemplified as operatively connected to apply a propulsion torque on the front most pair of wheels 110 of the trailed unit 104. The trailer actuator 112' is, in a similar vein as the actuator 112 of the tractor unit 102, configured to apply a torque on the pair of wheels 110 of the trailer unit 104 during propulsion, and to generate electric power during braking. The electric power generated during braking is preferably fed to energy storage system of the vehicle 100. The trailer actuator 112' is preferably also arranged as an electric machine. The actuator 112 and the trailer actuator 112' may also generate braking torque without storing energy. For instance, brake resistors and the like may be used to dissipate the excess energy from the actuators during braking.

Furthermore, the vehicle 100 also comprises a control unit 120. The control unit 120 is connected to the actuator 112 and the trailer actuator 112' and configured to control operation of these actuators. As will be evident from the below disclosure, the control unit 120 comprises a cruise control system 402. The cruise control system 402 comprises processing circuitry configured to control at least the actuator 112 of the tractor unit 102 to operate the vehicle at a demanded cruise control vehicle speed. The control unit 112 may, for example, be implemented on one or more vehicle unit computers (VUC). The VUC may be configured to execute vehicle control methods which are organized according to a layered functional architecture where some functionality may be comprised in a traffic situation management (TSM) domain in a higher layer and some other functionality may be comprised in a vehicle motion management (VMM) domain residing in a lower functional layer. The cruise control system may thus receive data indicative of a demanded cruise control vehicle speed from the VMM, the TSM or from a manually input. The demanded cruise control vehicle speed may be an adaptive cruise control vehicle speed taking the vehicle speed of the vehicle in front into account. The demanded cruise control vehicle speed may also be non-adaptive, i.e. the operator or other functionalities of the control unit 120 reduces the vehicle speed if a vehicle in front is driving at a speed lower than the demanded cruise control vehicle speed.

The processing circuitry of the cruise control system may include a microprocessor, microcontroller, programmable digital signal processor or another programmable device. The processing circuitry may also, or instead, each include an application specific integrated circuit, a programmable gate array or programmable array logic, a programmable logic device, or a digital signal processor. Where the processing circuitry includes a programmable device such as the microprocessor, microcontroller or programmable digital signal processor mentioned above, the processor may further include computer executable code that controls operation of the programmable device. It should be understood that all or some parts of the functionality provided by means of the processing circuitry may be at least partly integrated with the control unit 120.

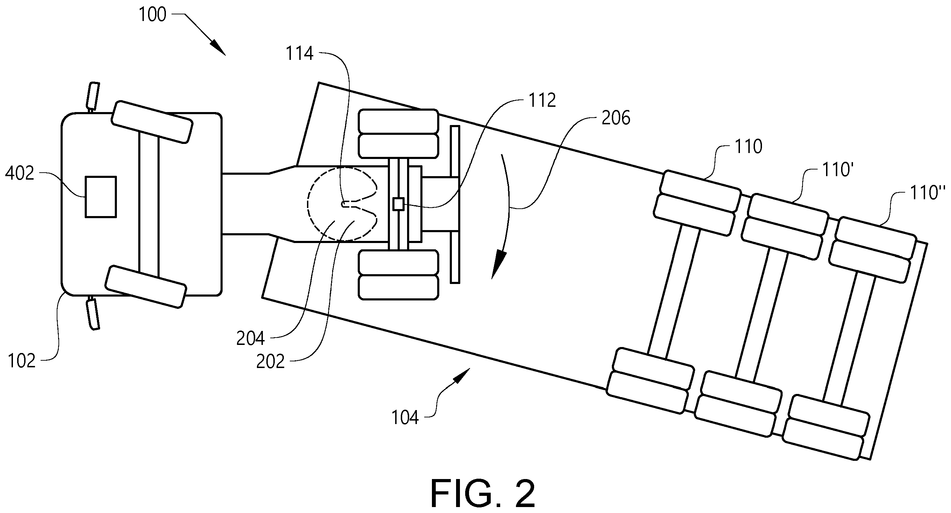

In order to describe the vehicle 100 in further detail, and in particular during a swing out condition, reference is now made to Fig. 2. As can be seen, and as briefly described above, the tractor unit 102 and the trailer unit 104 are pivotably coupled to each other, here illustrated as via a fifth-wheel coupling 202. The coupling comprises a kingpin 204 arranged on the tractor unit 102, and a vertical pin (not shown) arranged on the trailer unit 104, and a horseshoe shaped coupling device 204. The vertical pin, preferably made by steel, protrudes from a front end of the trailer unit 104 into the kingpin 204.

During operation of the vehicle 100, a so-called swing out condition may occur which is schematically illustrated in Fig. 2. The swing out condition is a situation where the trailer unit 104, and in particular the tire surface of the wheels 110, 110', 110" of the trailer unit 104, loses lateral grip against the road surface. As indicated, a relative rotation 206 between the trailer unit 104 and the tractor unit 102 will emerge. When the swing out condition reaches a certain level, i.e. when a relative rotation between the tractor unit 102 and the trailer unit 104 exceeds a limit, it will be more or less impossible to compensate for further rotation, whereby the trailer unit 104 finally will roll over, with the risk of also ending up with the trailer unit 102 rolling over.

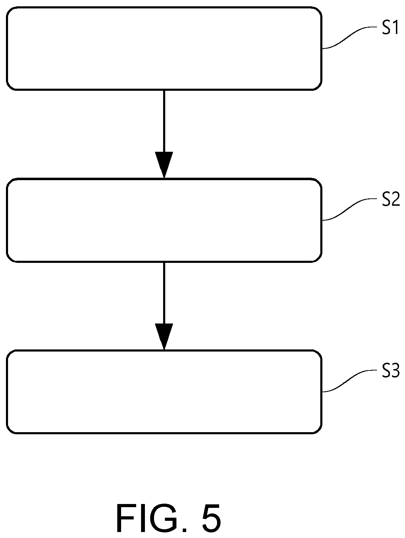

An approach of avoid excessive swing out of the trailer unit 104 relative to the tractor unit 102 will now be presented with reference to Fig. 2 in combination with Fig. 5. The vehicle 100 travels in a forward direction and the vehicle speed is controlled S1 by the processing circuitry of the cruise control system 402 to assume a demanded cruise control vehicle speed. Hence, the vehicle 100 is heading in a forward direction, preferably at a steady state vehicle speed. When operated as depicted in Fig. 2, the processing circuitry determines S2 a swing out condition of the trailer unit 104. As indicated above, the swing out condition is a situation in which a parameter indicative of a relative rotation between tractor unit 102 and the trailer unit 104 exceeds a predetermined threshold limit. The parameter indicative of the relative rotation of the tractor unit 102 and the trailer unit 104 can be a measured relative angle of rotation at the pivot point 114, the derivative of the relative angle, i.e. an angular velocity, a relative lateral slip of the pair of wheels of the trailer unit 104 and the pair of wheels of the tractor unit 102, etc. The various parameters described above may be used in isolation or in combination with each other for obtaining the parameter indicative of the relative rotation. Hence, the swing out condition may be based on a detected rotation rate of the at least one trailer unit relative to the tractor unit.

The swing out condition may be detected in a plurality of manners, and according to example embodiment, an articulation angle sensor and/or a camera may be used. The camera may be arranged on either or both of the tractor unit 102 and the trailer unit 104.

When it is determined that a swing out condition has been initiated, the processing circuitry of the cruise control system 402 controls S3 the actuator 112 of the tractor unit 102 to apply a propulsion torque, i.e. increased the vehicle speed, thereby deviating from the demanded cruise control vehicle speed. The processing circuitry of the

The processing circuitry of the cruise control system 402 preferably controls the actuator 112 to apply the propulsion torque for a predetermined time period, and subsequently returns to controlling the actuator 112 to operate the vehicle to obtain the demanded cruise control vehicle speed. As an alternative, or as a complement, the processing circuitry of the cruise control system 402 may control the actuator 112 to operate the vehicle to obtain the demanded cruise control vehicle speed in response to determining that the relative rotation, after a short period of time, falls below the predetermined threshold limit. The time period at which the actuator 112 applies the propulsion torque may also be based on the traffic in front of the vehicle in the ego lane. For example, if another vehicle is driving in front of the vehicle with a certain speed and at a certain distance from the vehicle, the relative speed and distance between the vehicles can determine the time period allowable to increase the speed, in order not to collide with the other vehicle in front of the ego vehicle.

By increasing the propulsion torque of the actuator 112 arranged on the tractor unit 102 for a relatively short period of time, and at a relatively early detection of the swing out condition, a pulling force in the coupling 114 will force the trailer to a straight path behind the tractor unit 102, and thereby inhibit further swing out of the trailer unit 104 relative to the tractor unit 102.

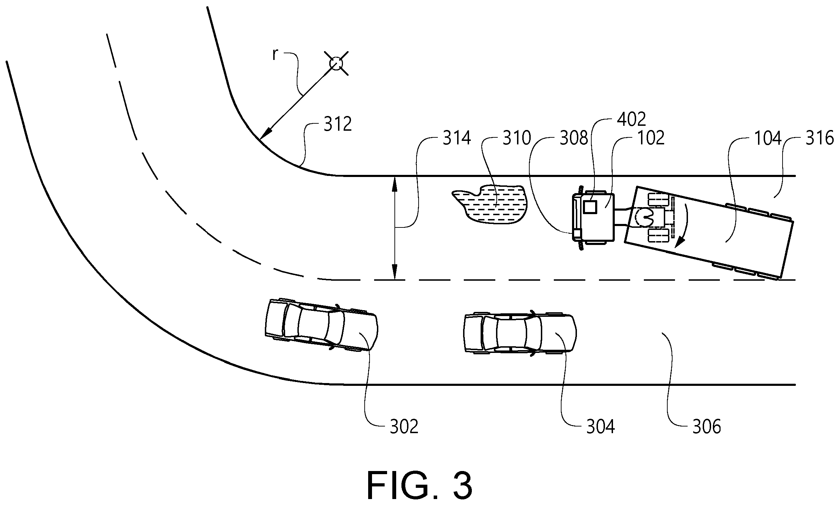

The vehicle 100 thus at least temporarily deviates from the demanded cruise control vehicle speed to inhibit the swing out condition. There are operating conditions when the swing out condition can be of particular danger, and there are operating conditions when a temporary increase of the vehicle speed can cause other problems for the vehicle. In the former example, i.e. when the swing out condition can be of particular danger, it can be beneficial to reduce the predetermined threshold limit such that the actuator 112 is controlled to apply a propulsion torque at an earlier point in time to avoid also a relatively minor swing out condition. Reference is therefore made to Fig. 3 for describing example embodiments of to control the cruise control system based on a number of operating situations.

As can be seen in Fig. 3, the vehicle 100 is operated at a road at which oncoming traffic is present. Hence, as illustrated in Fig. 3, other vehicles 302, 304 are approaching the vehicle 100 in the other vehicle lane 306. In such situation, a swing out condition may result in that the trailer unit 104 will collide with the oncoming vehicles 302, 304. The processing circuitry of the cruise control system 402 may thus set the predetermined threshold limit based on the oncoming traffic situation. The oncoming traffic situation may be determined by a camera 308 or equivalent arranged on the tractor unit 102. If one or more vehicles 302, 304 is approaching in the opposite vehicle lane 306, the processing circuitry can reduce the predetermined threshold limit to inhibit the trailer unit 104 from swinging out in the opposite vehicle lane 306.

According to another example, the processing circuitry of the cruise control system 402 may be configured to set the predetermined threshold limit based on a current road friction. As indicated in Fig. 3, the vehicle 100 is approaching a portion of the road path covered with ice 310. Thus, the current road friction at this position of the road is lower compared to the other parts of the road. The reduced friction may also be caused by water on the road, etc. When the road friction is reduced, it may be beneficial to inhibit the swing out condition early, whereby the predetermined threshold limit is reduced when the road friction between the tire surface of the wheels of the trailer unit 104 is reduced. Fig. 3 illustrates an ice spot, but it should be readily understood that this example is applicable for a situation when the road friction between the tire surface of the trailer unit 104 wheel(s) and the entire road surface is reduced.

Moreover, the temporary increase in vehicle speed, i.e. the deviation of the demanded cruise control vehicle speed, should preferably only be allowed when the driving situation so allows. Accordingly, the processing circuitry may determine that the upcoming driving situation allows for a temporarily increase in the vehicle speed. The upcoming driving situation may be detected by the above-described camera 308 or equivalent detector. According to an example, the processing circuitry may determine that the upcoming driving situation allows for a temporarily increase in the vehicle speed when the upcoming road path is free from obstacles, no oncoming vehicle is overtaking a vehicle in the same lane as the vehicle 100 is driving, etc. According to another example, the curvature 312, e.g. the radius r of the upcoming road path should preferably be above a predetermined threshold radius for allowing the processing circuitry to control the actuator 112 to apply the propulsion torque, to avoid excessive high vehicle speed resulting from the increased propulsion torque if the radius is too small. The applied propulsion torque may as an alternative be based on the curve radius, where the processing circuitry applies a lower torque for a narrow curve and a higher torque for a less narrow curve.

Still further, the processing circuitry may also control the actuator to apply the propulsion torque based on a width 314 of the ego lane 316 operated by the vehicle 100. In particular, the processing circuitry may be allowed to control the actuator to apply the propulsion torque only when the width 314 of the ego lane is larger that a predetermined threshold width. As an alternative, the predetermined threshold limit at which the processing circuitry controls the actuator 112 to apply the propulsion torque may be based on the width 314 of the ego lane. In particular, the predetermined threshold limit may be reduced when the width 314 of the ego lane is reduced and increased for a wider ego lane.

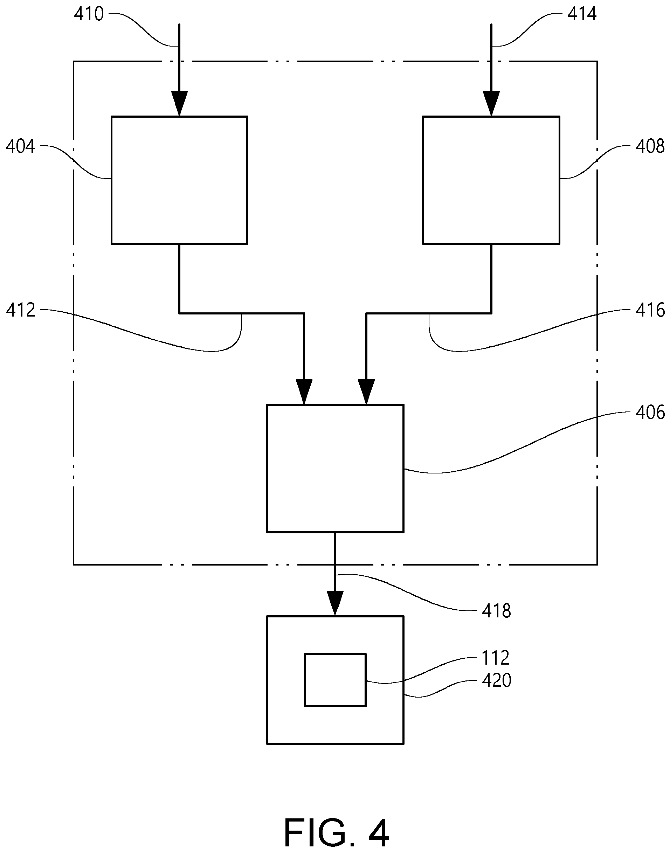

Reference is now made to Fig. 4 which is a schematic illustration of modules included for operating a method of controlling a cruise control system according to an example embodiment. The cruise control system 402 depicted in Fig. 4 comprises a trailer swing detection module 404, a trailer swing control module 406 and a trailer swing monitor module 408. Although Fig. 4 illustrates that the trailer swing detection module 404, the trailer swing control module 406 and the trailer swing monitor module 408 form part of the cruise control system 402, it should be readily understood that these modules may be separate from the cruise control system 402 and only transmit/receive control signals to/from the cruise control system 402.

The trailer swing detection module 404 is configured to detect the swing out condition of the trailer unit 104. The trailer swing detection module 404 receives a signal 410 indicative of a relative rotation between the tractor unit 102 and the trailer unit 104. The signal 410 may be received from e.g. a camera, an articulation angle sensor, a trailer slip determination module (not shown), etc. In response to the signal 410, the trailer swing detection module 404 compares the relative rotation with the above-described predetermined threshold limit, whereby a signal 412 indicative of a swing out condition to the trailer swing control module 406.

The trailer swing monitor module 408 on the other hand is configured to monitor whether the actuator 112 of the tractor unit 102 is allowed to apply the propulsion torque, i.e. to temporarily increase the vehicle speed. The trailer swing monitor module 408 may receive a signal 414 from the above-described camera 308 to determine, for example, if there is sufficient space to any objects ahead of the vehicle, any sharp curvature, etc. that would not allow the temporarily increase in vehicle speed. A signal 416 indicative of the upcoming traffic situation is transmitted to the trailer swing control module 406.

The trailer swing control module 406, when receiving the signal 412 from the trailer swing detection module 404 and the signal 416 from the trailer swing monitor module 408 transmits a signal 418 to motion support device 420 which controls the actuator 112. Thus, based on the signals 412, 416 received from the trailer swing detection module 404 and the trailer swing monitor module 408, the trailer swing control module 406 determines whether to apply a propulsion torque or not, and transmits a corresponding control signal 418 to the motion support device 420.

It is to be understood that the present disclosure is not limited to the embodiments described above and illustrated in the drawings; rather, the skilled person will recognize that many changes and modifications may be made within the scope of the appended claims.

## Claims

1. A computer implemented method of controlling a cruise control system of a vehicle comprising a tractor unit and at least one trailer unit pivotably coupled to each other, wherein the tractor unit comprises an actuator configured to apply a torque on at least one wheel of the tractor unit during propulsion, and to generate electric power during braking, the cruise control system comprising processing circuitry operable to control operation of the actuator, the method comprising:
- controlling (S1), by the processing circuitry, the actuator to operate the vehicle at a demanded cruise control vehicle speed;
- determining (S2), by the processing circuitry, a swing out condition of the at least one trailer unit, in which swing out condition a parameter indicative of a relative rotation between the tractor unit and the at least one trailer unit exceeds a predetermined threshold limit;
**characterised in that the method further comprises:**
- controlling (S3), by the processing circuitry, the actuator to apply a propulsion torque on the at least one wheel of the tractor unit for deviating from the demanded cruise control vehicle speed in response to the determined swing out condition of the at least one trailer unit.

2. The computer implemented method according to claim 1, wherein the processing circuitry is configured to control the actuator to apply the propulsion torque for a predetermined time period, and subsequently control the actuator to reduce the applied propulsion torque for operating the vehicle at the demanded cruise control vehicle speed.

3. The computer implemented method according to any one of claims 1 or 2, further comprising:
- determining, by the processing circuitry, that the relative rotation falls below the predetermined threshold limit after the actuator applies the propulsion torque; and
- controlling, by the processing circuitry, the actuator to reduce the applied propulsion torque for operating the vehicle at the demanded cruise control vehicle speed in response to the relative rotation falling below the predetermined threshold limit.

4. The computer implemented method according to any one of the preceding claims, wherein the swing out condition is further based on a detected rotation rate of the at least one trailer unit relative to the tractor unit.

5. The computer implemented method according to any one of the preceding claims, the method further comprising:
- determining, by the processing circuitry, an oncoming traffic situation for the vehicle; and
- setting, by the processing circuitry, the predetermined threshold limit based on the oncoming traffic situation.

6. The computer implemented method according to any one of the preceding claims, the method further comprising:
- determining, by the processing circuitry, a current road friction between a tire surface of a wheel of the trailer unit and a road surface operated by the vehicle; and
- setting, by the processing circuitry, the predetermined threshold limit based on the current road friction.

7. The computed implemented method according to any one of the preceding claims, the method further comprising:
- determining, by the processing circuitry, an upcoming driving situation for the vehicle;
- identifying, by the processing circuitry, the upcoming driving situation as allowing for a temporarily increased vehicle speed; and
- controlling, by the processing circuitry, the actuator to apply a propulsion torque on the at least one wheel of the tractor unit for deviating from the demanded cruise control vehicle speed only when the upcoming driving situation allows for the temporarily increased vehicle speed.

8. The computed implemented method according to any one of the preceding claims, the method further comprising:
- determining, by the processing circuitry, a curvature of an upcoming road path operable by the vehicle; and
- controlling, by the processing circuitry, the actuator to apply a propulsion torque on the at least one wheel of the tractor unit for deviating from the demanded cruise control vehicle speed only when a curve radius of the curvature of the upcoming road path is above a predetermined threshold radius.

9. The computer implement method according to any one of the preceding claims, the method further comprising:
- determining, by the processing circuitry, a width of an ego lane operated by the vehicle; and
- controlling, by the processing circuitry, the actuator to apply a propulsion torque on the at least one wheel of the tractor unit for deviating from the demanded cruise control vehicle speed only when the width of the ego lane is larger than a predetermined threshold width.

10. The computer implemented method according to any one of the preceding claims, wherein the swing out condition is detected by at least one of an articulation angle sensor and a camera arranged on one of the tractor unit and the at least one trailer unit.

11. A cruise control system for a vehicle comprising a tractor unit and at least one trailer unit, the tractor unit and the at least one trailer unit pivotably coupled to each other, wherein the cruise control system comprises a control unit comprising control circuitry configured to control an actuator of the tractor unit to apply a torque on at least one wheel of the tractor unit during propulsion, and to generate electric power during braking, the processing circuitry being configured to:
- control the actuator to operate the vehicle at a demanded cruise control vehicle speed;
- determine a swing out condition of the at least one trailer unit, in which swing out condition a parameter indicative of a relative rotation between the tractor unit and the at least one trailer unit exceeds a predetermined threshold limit; and
- control the actuator to apply a propulsion torque on the at least one wheel of the tractor unit for deviating from the demanded cruise control vehicle speed in response to the determined swing out condition of the at least one trailer unit.

12. A vehicle comprising a cruise control system according to claim 11.

13. A computer program comprising program code which, when the program is executed by a computer, cause the computer to carry out the method of claim 1.

14. A non-transitory computer readable medium carrying a computer program according to claim 13.

## Patentansprüche

1. Computerimplementiertes Verfahren zum Steuern eines Geschwindigkeitsregelungssystems eines Fahrzeugs, das eine Zugmaschine und mindestens eine Anhängereinheit umfasst, die schwenkbar miteinander verbunden sind, wobei die Zugmaschine einen Aktuator umfasst, der dazu konfiguriert ist, während des Antriebs ein Drehmoment auf mindestens ein Rad der Zugmaschine auszuüben und während des Bremsens elektrische Energie zu erzeugen, wobei das Geschwindigkeitsregelsystem eine Verarbeitungsschaltung umfasst, die betrieben werden kann, um den Betrieb des Aktuators zu steuern, wobei das Verfahren Folgendes umfasst:
- Steuern (S1) des Aktuators durch die Verarbeitungsschaltung, um das Fahrzeug mit einer geforderten Drehzahl für das Fahrzeug mit Geschwindigkeitsregelung zu betreiben;
- Bestimmen (S2) eines Ausschwenkzustands der mindestens einen Anhängereinheit durch die Verarbeitungsschaltung, wobei in dem Ausschwenkzustand ein Parameter, der eine relative Drehung zwischen der Zugmaschine und der mindestens einen Anhängereinheit angibt, einen vorbestimmten Schwellenwert überschreitet;
**dadurch gekennzeichnet, dass das Verfahren ferner Folgendes umfasst:**
- Steuern (S3) des Aktuators durch die Verarbeitungsschaltung, um ein Antriebsdrehmoment auf das mindestens eine Rad der Zugmaschine auszuüben, um von der geforderten Drehzahl des Fahrzeugs mit Geschwindigkeitsregelung in Reaktion auf den bestimmten Ausschwenkzustand der mindestens einen Anhängereinheit abzuweichen.

2. Computerimplementiertes Verfahren nach Anspruch 1, wobei die Verarbeitungsschaltung dazu konfiguriert ist, den Aktuator zu steuern, um das Antriebsdrehmoment für einen vorbestimmten Zeitraum auszuüben, und anschließend den Aktuator zu steuern, um das ausgeübte Antriebsdrehmoment zu reduzieren, um das Fahrzeug mit der geforderten Drehzahl des Fahrzeugs mit Geschwindigkeitsregelung zu betreiben.

3. Computerimplementiertes Verfahren nach einem der Ansprüche 1 oder 2, das ferner Folgendes umfasst:
- Bestimmen durch die Verarbeitungsschaltung, dass die relative Drehung unter den vorbestimmten Schwellenwert fällt, nachdem der Aktuator das Antriebsdrehmoment ausübt; und
- Steuern des Aktuators durch die Verarbeitungsschaltung, um das ausgeübte Antriebsdrehmoment zu reduzieren, um das Fahrzeug mit der geforderten Drehzahl des Fahrzeugs mit Geschwindigkeitsregelung zu betreiben, wenn die relative Drehung unter den vorbestimmten Schwellenwert fällt.

4. Computerimplementiertes Verfahren nach einem der vorhergehenden Ansprüche, wobei der Ausschwenkzustand ferner auf einer detektierten Drehungsrate der mindestens einen Anhängereinheit relativ zur Zugmaschine basiert.

5. Computerimplementiertes Verfahren nach einem der vorhergehenden Ansprüche, wobei das Verfahren ferner Folgendes umfasst:
- Bestimmen einer Gegenverkehrssituation für das Fahrzeug durch die Verarbeitungsschaltung; und
- Einstellen des vorbestimmten Schwellenwerts durch die Verarbeitungsschaltung basierend auf der Gegenverkehrssituation.

6. Computerimplementiertes Verfahren nach einem der vorhergehenden Ansprüche, wobei das Verfahren ferner Folgendes umfasst:
- Bestimmen einer aktuellen Straßenreibung zwischen einer Reifenoberfläche eines Rades der Anhängereinheit und einer vom Fahrzeug befahrbaren Straßenoberfläche durch die Verarbeitungsschaltung; und
- Einstellen des vorbestimmten Schwellenwerts durch die Verarbeitungsschaltung basierend auf der aktuellen Straßenreibung.

7. Computerimplementiertes Verfahren nach einem der vorhergehenden Ansprüche, wobei das Verfahren ferner Folgendes umfasst:
- Bestimmen einer bevorstehenden Fahrsituation für das Fahrzeug durch die Verarbeitungsschaltung;
- Identifizieren der bevorstehenden Fahrsituation als eine Situation, die eine vorübergehende Erhöhung der Fahrzeugdrehzahl gestattet, durch die Verarbeitungsschaltung; und
- Steuern des Aktuators durch die Verarbeitungsschaltung, um ein Antriebsdrehmoment auf das mindestens eine Rad der Zugmaschine auszuüben, um von der geforderten Drehzahl des Fahrzeugs mit Geschwindigkeitsregelung nur dann abzuweichen, wenn die bevorstehende Fahrsituation die vorübergehend erhöhte Fahrzeugdrehzahl gestattet.

8. Computerimplementiertes Verfahren nach einem der vorhergehenden Ansprüche, wobei das Verfahren ferner Folgendes umfasst:
- Bestimmen einer Krümmung eines bevorstehenden, vom Fahrzeug befahrbaren Straßenpfads durch die Verarbeitungsschaltung; und
- Steuern des Aktuators durch die Verarbeitungsschaltung, um ein Antriebsdrehmoment auf das mindestens eine Rad der Zugmaschine auszuüben, um von der geforderten Drehzahl des Fahrzeugs mit Geschwindigkeitsregelung nur dann abzuweichen, wenn ein Kurvenradius der Krümmung des bevorstehenden Straßenpfads über einem vorbestimmten Schwellenradius liegt.

9. Computerimplementiertes Verfahren nach einem der vorhergehenden Ansprüche, wobei das Verfahren ferner Folgendes umfasst:
- Bestimmen einer Breite einer vom Fahrzeug befahrbaren Ego-Fahrspur durch die Verarbeitungsschaltung; und
- Steuern des Aktuators durch die Verarbeitungsschaltung, um ein Antriebsdrehmoment auf das mindestens eine Rad der Zugmaschine auszuüben, um von der geforderten Drehzahl des Fahrzeugs mit Geschwindigkeitsregelung nur dann abzuweichen, wenn die Breite der Ego-Fahrspur größer als eine vorbestimmte Schwellenbreite ist.

10. Computerimplementiertes Verfahren nach einem der vorhergehenden Ansprüche, wobei der Ausschwenkzustand durch mindestens eines von einem Knickwinkelsensor und einer Kamera detektiert wird, der bzw. die an der Zugmaschine oder der mindestens einen Anhängereinheit angeordnet ist.

11. Geschwindigkeitsregelungssystem für ein Fahrzeug, das eine Zugmaschine und mindestens eine Anhängereinheit umfasst, wobei die Zugmaschine und die mindestens eine Anhängereinheit schwenkbar miteinander verbunden sind, wobei das Geschwindigkeitsregelungssystem eine Steuereinheit umfasst, die eine Steuerschaltung umfasst, die dazu konfiguriert ist, einen Aktuator der Zugmaschine zu steuern, um während des Antriebs ein Drehmoment auf mindestens ein Rad der Zugmaschine auszuüben und während des Bremsens elektrische Energie zu erzeugen, wobei die Verarbeitungsschaltung für Folgendes konfiguriert ist:
- Steuern des Aktuators, um das Fahrzeug mit einer geforderten Drehzahl des Fahrzeugs mit Geschwindigkeitsregelung zu betreiben;
- Bestimmen eines Ausschwenkzustands der mindestens einen Anhängereinheit, wobei in dem Ausschwenkzustand ein Parameter, der eine relative Drehung zwischen der Zugmaschine und der mindestens einen Anhängereinheit angibt, einen vorbestimmten Schwellenwert überschreitet; und
- Steuern des Aktuators, um ein Antriebsdrehmoment auf das mindestens eine Rad der Zugmaschine auszuüben, um von der geforderten Drehzahl des Fahrzeugs mit Geschwindigkeitsregelung in Reaktion auf den bestimmten Ausschwenkzustand der mindestens einen Anhängereinheit abzuweichen.

12. Fahrzeug, das ein Geschwindigkeitsregelungssystem nach Anspruch 11 umfasst.

13. Computerprogramm, das einen Programmcode umfasst, der, wenn das Programm von einem Computer ausgeführt wird, den Computer dazu veranlasst, das Verfahren nach Anspruch 1 durchzuführen.

14. Nichtflüchtiges, computerlesbares Medium, das ein Computerprogramm nach Anspruch 13 enthält.

## Revendications

1. Procédé informatisé de commande d'un système de régulation de vitesse d'un véhicule comprenant une unité de tracteur et au moins une unité de remorque couplées de manière pivotante l'une à l'autre, dans lequel l'unité de tracteur comprend un actionneur configuré pour appliquer un couple sur au moins une roue de l'unité de tracteur pendant la propulsion, et pour générer de l'énergie électrique pendant le freinage, le système de régulation de vitesse comprenant un circuit de traitement permettant de commander le fonctionnement de l'actionneur, le procédé comprenant les étapes consistant à :
- commander (S1), par le circuit de traitement, l'actionneur pour faire fonctionner le véhicule à la vitesse exigée du régulateur de vitesse ;
- déterminer (S2), par le circuit de traitement, un état d'oscillation de l'au moins une unité de remorque, état dans lequel un paramètre indiquant une rotation relative entre l'unité de tracteur et l'au moins une unité de remorque dépasse une limite de seuil prédéterminée ;
**caractérisé en ce que** le procédé comprend en outre :
- la commande (S3), par le circuit de traitement, de l'actionneur pour appliquer un couple de propulsion sur au moins une roue de l'unité de tracteur pour dévier de la vitesse exigée de véhicule à régulateur vitesse en réponse à l'état d'oscillation déterminé de l'unité de remorque.

2. Procédé informatisé selon la revendication 1, dans lequel le circuit de traitement est configuré pour commander l'actionneur pour appliquer le couple de propulsion pendant une période prédéterminée, et pour commander ensuite l'actionneur pour réduire le couple de propulsion appliqué pour faire fonctionner le véhicule à la vitesse exigée de véhicule à régulateur de vitesse.

3. Procédé informatisé selon l'une quelconque des revendications 1 ou 2, comprenant en outre les étapes consistant à :
- déterminer, par le circuit de traitement, que la rotation relative tombe en dessous de la limite de seuil prédéterminée après que l'actionneur a appliqué le couple de propulsion ; et
- commander, par le circuit de traitement, l'actionneur pour réduire le couple de propulsion appliqué pour faire fonctionner le véhicule à la vitesse exigée de véhicule à régulateur de vitesse en réponse à la rotation relative tombant en dessous de la limite de seuil prédéterminée.

4. Procédé informatisé selon l'une quelconque des revendications précédentes, dans lequel la condition d'oscillation vers l'extérieur est en outre basée sur une vitesse de rotation détectée de l'au moins une unité de remorque par rapport à l'unité de tracteur.

5. Procédé informatisé selon l'une quelconque des revendications précédentes, le procédé comprenant en outre les étapes consistant à :
- déterminer, par le circuit de traitement, une situation de circulation en sens inverse pour le véhicule ; et
- régler, par le circuit de traitement, la limite de seuil prédéterminée en fonction de la situation de trafic en sens inverse.

6. Procédé informatisé selon l'une quelconque des revendications précédentes, le procédé comprenant en outre les étapes consistant à :
- déterminer, au moyen des circuits de traitement, un frottement courant de la route entre la surface d'un pneu d'une roue de l'unité de remorque et la surface de la route utilisée par le véhicule ; et
- régler, par le circuit de traitement, la limite de seuil prédéterminée sur la base du frottement actuel sur la route.

7. Procédé informatisé selon l'une quelconque des revendications précédentes, le procédé comprenant en outre les étapes consistant à :
- déterminer, par le circuit de traitement, une situation de conduite en sens inverse pour le véhicule ;
- identifier, par le circuit de traitement, la situation de conduite en sens inverse comme permettant une augmentation temporaire de la vitesse du véhicule ; et
- commander, par le circuit de traitement, l'actionneur pour appliquer un couple de propulsion sur l'au moins une roue de l'unité de tracteur pour dévier de la vitesse exigée du véhicule à régulateur de vitesse seulement lorsque la situation de conduite en sens inverse permet l'augmentation temporaire de la vitesse du véhicule.

8. Procédé informatisé selon l'une quelconque des revendications précédentes, le procédé comprenant en outre les étapes consistant à :
- déterminer, par le circuit de traitement, une courbure d'une trajectoire routière en sens inverse utilisable par le véhicule ;
- commander, par le circuit de traitement, l'actionneur pour appliquer un couple de propulsion sur au moins une roue de l'unité de tracteur pour s'écarter de la vitesse exigée de véhicule à régulateur de vitesse seulement lorsqu'un rayon de courbure de la trajectoire de route en sens inverse est supérieur à un rayon seuil prédéterminé.

9. Procédé d'implémentation informatique selon l'une quelconque des revendications précédentes, le procédé comprenant en outre les étapes consistant à :
- déterminer, par le circuit de traitement, la largeur d'une voie spécifique parcourue par le véhicule ; et
- commander, par le circuit de traitement, l'actionneur pour appliquer un couple de propulsion sur l'au moins une roue de l'unité de tracteur pour s'écarter de la vitesse exigée de véhicule à régulateur de vitesse uniquement lorsque la largeur de la voie spécifique est supérieure à une largeur seuil prédéterminée.

10. Procédé informatisé selon l'une quelconque des revendications précédentes, dans lequel la condition d'oscillation vers l'extérieur est détectée par au moins un capteur d'angle d'articulation et une caméra agencée sur l'une de l'unité de tracteur et de l'au moins une unité de remorque.

11. Système de régulation de vitesse pour véhicule comprenant une unité de tracteur et au moins une unité de remorque, l'unité de tracteur et l'au moins une unité de remorque étant couplées de manière à pouvoir pivoter l'une par rapport à l'autre, dans lequel le système de régulation de vitesse comprend une unité de commande comprenant un circuit de commande configuré pour commander un actionneur de l'unité de tracteur afin d'appliquer un couple sur au moins une roue de l'unité de tracteur pendant la propulsion, et pour générer de l'énergie électrique pendant le freinage, le circuit de traitement étant configuré pour :
- commander l'actionneur pour faire fonctionner le véhicule à la vitesse exigée de véhicule à régulateur de vitesse ;
- déterminer une condition d'oscillation de ladite au moins une unité de remorque, condition dans laquelle un paramètre indicatif d'une rotation relative entre l'unité de tracteur et ladite au moins une unité de remorque dépasse une limite de seuil prédéterminée ; et
- commander l'actionneur pour appliquer un couple de propulsion sur l'au moins une roue de l'unité de tracteur afin de dévier de la vitesse exigée de véhicule à régulateur de vitesse en réponse à la condition déterminée d'oscillation de l'au moins une unité de remorque.

12. Véhicule comprenant un système de régulation de vitesse selon La revendication 11.

13. Programme informatique comprenant un code de programme qui, lorsque le programme est exécuté par un ordinateur, amène l'ordinateur à exécuter le procédé selon la revendication 1.

14. Support non transitoire lisible par ordinateur comportant un programme informatique selon la revendication 13.
